Europäisches Patentamt

European Patent Office

Office européen des brevets

(19)

(11) Veröffentlichungsnummer: **0 200 243**
**B1**

(12) # EUROPÄISCHE PATENTSCHRIFT

(45) Veröffentlichungstag der Patentschrift:
30.05.90

(51) Int. Cl.⁵: **C03B 11/00,** C03B 19/09,
C03B 37/012

(21) Anmeldenummer: 86200490.0

(22) Anmeldetag: 21.03.86

(54) **Verfahren und Vorrichtung zur Herstellung von Glaskörpern.**

(30) Priorität: 29.03.85 DE 3511450

(43) Veröffentlichungstag der Anmeldung:
10.12.86 Patentblatt 86/45

(45) Bekanntmachung des Hinweises auf die Patenterteilung:
30.05.90 Patentblatt 90/22

(84) Benannte Vertragsstaaten:
DE FR GB IT NL SE

(56) Entgegenhaltungen:
EP-A- 0 123 191
EP-A- 0 153 619
GB-A- 1 010 702

(73) Patentinhaber: Philips Patentverwaltung GmbH,
Wendenstrasse 35 Postfach 10 51 49,
D-2000 Hamburg 1(DE)

(84) Benannte Vertragsstaaten: DE

(73) Patentinhaber: N.V. Philips' Gloeilampenfabrieken,
Groenewoudseweg 1, NL-5621 BA Eindhoven(NL)

(84) Benannte Vertragsstaaten: FR GB IT NL SE

(72) Erfinder: Clasen, Rolf, Dipl.-Phys., Dr.,
Schlossparkstrasse 36, D-5100 Aachen(DE)

(74) Vertreter: Nehmzow-David, Fritzi-Maria et al, Philips
Patentverwaltung GmbH
Wendenstrasse 35 Postfach 10 51 49,
D-2000 Hamburg 1(DE)

## Beschreibung

Die Erfindung bezieht sich auf ein Verfahren zur Herstellung von Glaskörpern, bei dem aus dem Ausgangsmaterial für den Glaskörper ein poröser Grünkörper durch Strangpressen geformt und dieser anschließend getrocknet, gereinigt und gesintert wird.

Die Erfindung bezieht sich weiter auf eine Vorrichtung zur Durchführung eines solchen Verfahrens mit einer Strangpresse mit einem Behälter zur Aufnahme von Ausgangsmaterial für den Glaskörper und mit einem Stempel, mit dem das Ausgangsmaterial in Richtung auf eine Austrittsdüse preßbar ist.

Ein solches Verfahren und eine solche Vorrichtung sind aus der GB-PS 1 010 702 bekannt.

Das eingangs genannte Verfahren ist insbesondere geeignet zur Herstellung von Vorformen für optische Wellenleiter aus Quarzglas.

Optische Wellenleiter werden für eine Vielzahl von Anwendungszwecken eingesetzt, so z.B. für Lichtübertragungseinrichtungen kurzer Distanz oder für Lichtübertragungssysteme großer Distanz, wie bei optischen Kommunikationssystemen, und bestehen überwiegend aus einem Glas mit hohem Siliciumdioxidgehalt.

Gläser, die für optische Wellenleiter geeignet sind, sind ebenfalls mit Vorteil verwendbar für die Herstellung von Lampenkolben für Halogen- oder Gasentladungslampen, denn diese Gläser müssen, ebenso wie die Gläser für optische Wellenleiter, nahezu wasserfrei sein und einen hohen Siliciumdioxidgehalt aufweisen.

Aus GB-PS 10 10 702 ist ein Verfahren bekannt, bei welchem pulverförmiges reines oder nahezu reines $SiO_2$ mit einem flüssigen Bindemittel in einer Menge von 1 bis 50 Gew.% und gegebenenfalls einem weiteren, den Strangpreßprozeß begünstigenden Gleitmittel in einer Menge von 0,1 bis 10 Gew.%, bezogen auf den $SiO_2$-Anteil, zu einer Strangpreßmasse verarbeitet und über einen Strangpreßprozeß verformt wird. Als flüssige Bindemittel kommen z.B. organische Flüssigkeiten, wie Polyvinylalkohol, oder Wasser in Betracht.

Dieses Verfahren entspricht Verfahren aus der keramischen Technologie, bei denen aufgemahlene pulverförmige Rohstoffe mit Korndurchmessern > 1µm mit Wasser, Bindemitteln und Gleitmitteln zu hochviskosen strangpreßfähigen Massen aufbereitet werden.

Beim Verarbeiten von hochdispersen Ausgangspulvern mit Korndurchmessern < 1µm (die durch übliche Mahlprozesse nicht mehr herstellbar sind), wie sie für die Herstellung von Quarzglaskörpern insbesondere für Vorformen von optischen Wellenleitern eingesetzt werden, entstehen nun Probleme beim Mischen bzw. Kneten, insbesondere wenn die Ausgangsmassen hoch gefüllt sind, da eine wesentlich größere Anzahl von Teilchen gleichmäßig verteilt und eine wesentlich größere Oberfläche mit den Zusatzstoffen (Binde- und Gleitmittel) gleichmäßig bedeckt werden muß. So liegen beispielsweise die typischen Misch- und Knetzeiten für eine Ausgangsmasse aus hochdispersen Quarzteilchen (10 bis 100 nm Teilchendurchmesser) mit 60 Gew.% $SiO_2$ und 36 Gew.% Wasser (Rest Zusatzstoffe) bei einer bis drei Stunden. Neben diesem hohen Zeitbedarf für die Homogenisierung einer hochviskosen Ausgangsmasse tritt ein weiteres Problem auf: mit längerer Knetzeit tritt bei Einsatz von handelsüblichen Knet- oder Mischvorrichtungen ein zunehmender Abrieb auf, so daß Metallverunreinigungen in die Ausgangsmasse gelangen. Schon Verunreinigungen, z.B. in Form von Übergangsmetallen, im ppb-Bereich sind jedoch für Massen, aus denen optische Wellenleiter hergestellt werden sollen, problematisch, da sie das Transmissionsverfahren für optische Strahlung der aus diesen Ausgangsmassen hergestellten Quarzglaskörper stark beeinträchtigen, derartige Verunreinigungen müssen daher durch sehr aufwendige Reinigungsprozesse wieder aus einem Grünkörper entfernt werden. Ein weiteres sehr gravierendes Problem entsteht beim Kneten von hochgefüllten Ausgangsmassen darüberhinaus durch den Einschluß von Luftblasen, die infolge der hohen Viskosität einer über einen Strangpreßprozeß zu verarbeitenden Ausgangsmasse nicht mehr von allein aus der Masse entweichen können und zu Inhomogenitäten des Grünkörpers und auch des aus ihm gesinterten Quarzglaskörpers führen.

Weniger stark gefüllte Ausgangsmassen, z.B. in Form von dünnflüssigeren Suspensionen, aus denen eingeschlossene Gasblasen leichter selbsttätig entweichen können, sind wiederum für einen Strangpreßprozeß nicht geeignet, da keine formstabilen Preßkörper hergestellt werden können.

Der Erfindung liegt die Aufgabe zugrunde, ein Verfahren und eine Vorrichtung der eingangs genannten Art zur Durchführung dieses Verfahrens zu schaffen, mit dem es möglich ist, aus Ausgangsmaterial für die Herstellung von Glaskörpern in Form einer relativ dünnflüssigen Suspension mit einem Feststoffanteil an hochdispersen Teilchen durch einen Strangpreßprozeß formstabilisierte Grünkörper herzustellen.

Diese Aufgabe wird erfindungsgemäß dadurch gelöst, daß das Ausgangsmaterial in Form einer thixotropen Suspension durch Einwirkung mechanischer Kräfte in einen Zustand mit Viskositätsminimum überführt und homogenisiert, in eine an ihrem Austrittsende zunächst verschlossene Strangpresse eingefüllt, in der Strangpresse im Bereich nach dem Mundstück und vor dem Austrittsende auf eine Temperatur unterhalb des Siedepunktes der Dispergierflüssigkeit erhitzt und anschließend nach Öffnen der Strangpresse als formstabil verformter Grünkörper ausgepreßt wird.

Eine Vorrichtung zur Durchführung dieses Verfahrens ist gekennzeichnet durch ein an die Austrittsdüse anschließendes Austrittsrohr, das an seinem, der Austrittsdüse gegenüberliegenden Ende mit einem Stopfen verschließbar ist und eine Einrichtung, über welche in einer Erhitzungszone Hochfrequenz- oder Mikrowellenenergie in das Austrittsrohr und die in ihm befindlichen Ausgangsmasse in Form einer dünnflüssigen Suspension einkoppelbar ist.

Bei Suspensionen aus hochdispersen $SiO_2$-Teilchen eines Teilchendurchmessers im Bereich von 10 bis 500 nm liegt ein besonders hoher Thixotropieeffekt vor, der noch durch Zusatz einer die Vernetzung der Feststoffpartikel in der Suspension fördernden ionogenen Substanz, die den pH-Wert der Suspension in den sauren Bereich (pH > 3) oder in Richtung auf den basischen Bereich (pH ≈ 5,5 bis 8) verschiebt, unterstützt wird, der dazu ausgenutzt werden kann, das Ausgangsmaterial zunächst durch Einwirkung mechanischer Kräfte, vorzugsweise Schall oder Ultraschall, zu verflüssigen, d.h. in einen Zustand mit Viskositätsminimum zu überführen, wobei das Ausgangsmaterial im verflüssigten Zustand effizient homogenisiert und verdichtet und nach Abkopplung der mechanischen Kräfte im wiederverfestigten Zustand insbesondere über einen Strangpreßprozeß verformt werden kann, wobei Vernetzungsreaktionen zwischen den Feststoffteilchen der Suspension durch eine Erhitzung der Suspension auf Temperaturen unterhalb des Siedepunktes des Dispergiermittels beschleunigt werden können.

Nach vorteilhaften Weiterbildungen des Verfahrens gemäß der Erfindung wird als Ausgangsmaterial für den Glaskörper eine Suspension eingesetzt, die SiO₂-Partikel eines Durchmessers im Bereich von 10 bis 500 nm, vorzugsweise 15 bis 100 nm, mit einem mittleren Teilchendurchmesser von 40 nm bei einem Feststoff:Dispergierflüssigkeit- Gewichtsverhältnis von 1:0,8 bis 1:2 enthält. Hiermit ist der Vorteil verbunden, daß sich bei Zusatz von 0,1 bis 5,0 Gew.%, vorzugsweise 0,5 bis 1,0 Gew.%, bezogen auf den Feststoffanteil der Suspension, eines ionogenen Zusatzstoffes, der den pH-Wert der Suspension in Richtung auf den basischen Bereich verschiebt, ein besonders hoher Thixotropieeffekt ergibt und daß aus einem solchen Ausgangsmaterial trotz seiner hohen Füllung mit hochdispersen Feststoffteilchen sehr homogene, hochverdichtete Grünkörper über einen Strangpreßprozeß hergestellt werden können.

Nach weiteren vorteilhaften Ausgestaltungen der Erfindung wird als ionogener Zusatzstoff eine Ammoniumverbindung und insbesondere NH₄F in wässeriger Lösung eingesetzt. Ammoniumverbindungen sind leicht flüchtig und sind daher in einem nachfolgenden Reinigungs-Erhitzungsschritt rückstandslos aus dem Grünkörper zu entfernen, so daß Quarzglaskörper einer sehr hohen Reinheit herstellbar sind. Durch den Zusatz einer Ammoniumverbindung, beispielsweise NH₃ in wässeriger Lösung, werden Grünkörper einer relativ hohen Festigkeit erreicht, da an den Kontaktstellen zweier SiO₂-Primärpartikel eine Gelbildung auftritt. Bei beispielsweise einer Suspensionstemperatur von 20°C und einem pH-Wert ≤ 10 geht SiO₂ in der Größenordnung von etwa 100 ppm in Lösung und wird an den Kontaktstellen ausgeschieden und bildet damit eine Brückenschicht. Wird NH₄F in wässeriger Lösung als ionogener Zusatzstoff eingesetzt, kann eine Fluordotierung erreicht werden, die beispielsweise für die Herstellung von Mantelgläsern für optische Wellenleiter geeignet ist.

Nach einer weiteren vorteilhaften Ausgestaltung des Verfahrens nach der Erfindung wird das Ausgangsmaterial durch Einwirkung von Schall bei einer Frequenz f im Bereich von 20 bis 200 Hz oder Ultraschall bei einer Frequenz f im Bereich von 20 bis 50 kHz in einen Zustand mit Viskositätsminimum überführt. Eine Gel-Sol-Umwandlung tritt bei thixotropen Systemen bei jeder Art mechanischer Einwirkung, z.B. auch Rühren oder Schütteln, ein. Wird jedoch zur Verflüssigung einer hochviskosen Ausgangsmasse ein Schall- oder Ultraschallschwinger eingesetzt, dessen Amplitude so bemessen ist, daß das Schall- bzw. Ultraschallfeld in das zu verflüssigende Ausgangsmaterial eingekoppelt wird, ergibt sich eine besonders schnelle Verflüssigung des Ausgangsmaterials und damit eine wirkungsvolle Auflösung von Packungshohlräumen im Ausgangsmaterial (Gasblasen steigen im verflüssigten Ausgangsmaterial nach oben und werden so selbsttätig eliminiert). Ein solches Entgasen kann z.B. durch Verflüssigen des Ausgangsmaterials im Vakuum noch beschleunigt werden. Mit dem Verfahrensschritt nach dieser Weiterbildung der Erfindung ist ein besonderer Vorteil zur homogenen Aufbereitung hochviskoser, in einem Strangpreßprozeß weiter zu verarbeitender Massen zu sehen.

Nach einer weiteren vorteilhaften Ausgestaltung des Verfahrens nach der Erfindung wird das Ausgangsmaterial in der Strangpresse durch Einkoppeln von Mikrowellen- oder Hochfrequenzenergie auf eine Temperatur unterhalb des Siedepunktes der Dispergierflüssigkeit erhitzt. Diesem Verfahrensschritt liegt die Erkenntnis zugrunde, das Vernetzungsreaktionen zwischen Primärteilchen, wie sie bei thixotropen Systemen eintreten, entscheidend beschleunigt werden können durch erhöhte Temperaturen unterhalb des Siedepunktes der Dispergierflüssigkeit. Wässerige Suspensionen können dazu mit Vorteil direkt über eingekoppelte Mikrowellenenergie erhitzt werden.

Die mit der Erfindung erzielbaren Vorteile bestehen insbesondere darin, daß strangpreßfähige Massen mit hochdispersen Feststoffteilchen auf besonders effiziente Weise homogenisiert werden können. Ein weiterer Vorteil ist, daß mit einem Strangpreßprozeß in einem kontinuierlichen Prozeß Grünkörper mit einem beliebigen Querschnitt erhalten werden können, die gerade als Vorformen für optische Wellenleiter besonders geeignet sind. Sie sind einerseits so fest, daß sie ohne Schwierigkeiten handhabbar sind, sie weisen eine für die nachfolgende Sinterung des Grünkörpers erwünschte hohe Dichte (35 bis 50% der Dichte kompakten Quarzglases) auf und sie sind andererseits porös und damit gasdurchlässig, so daß sie in einem nach der Trocknung erfolgenden Reinigungsschritt in einer mit vorliegenden Verunreinigungen reagierenden erhitzten Gasphase effizient gereinigt werden können. Ein weiterer großer Vorteil ist, daß außerordentlich homogene Grünkörper erhalten werden können; dies ist nicht nur im Hinblick auf einen zu erreichenden blasen- und schlierenfreien Glaskörper von Bedeutung, sondern auch für die Trocknung der verpreßten Grünkörper. Besonders an Inhomogenitäten im Grünkörper treten häufig Trockenrisse auf. Trockenrisse treten jedoch auch infolge nicht ausreichender Bindungskräfte zwischen den Feststoffteilchen auf, also dann, wenn die Oberfläche der Feststoffteilchen nicht gleichmäßig genug mit Vernetzungsreaktionen fördernden Zusatzstoffen bedeckt ist. Bei hochviskosen Systemen mit großen Oberflächen ist dies problematisch und das Verfahren der vorliegenden Erfindung schafft hier durch die erreichbare sehr gute Homogenisierung des Ausgangsmaterials eine entscheidende Verbesserung.

Anhand der Zeichnung wird ein Ausführungsbeispiel der Erfindung beschrieben und die Erfindung wird in ihrer Wirkungsweise erläutert.

Die Figur zeigt einen Teil einer Strangpresse nach der Erfindung im Schnitt in zwei Betriebszuständen.

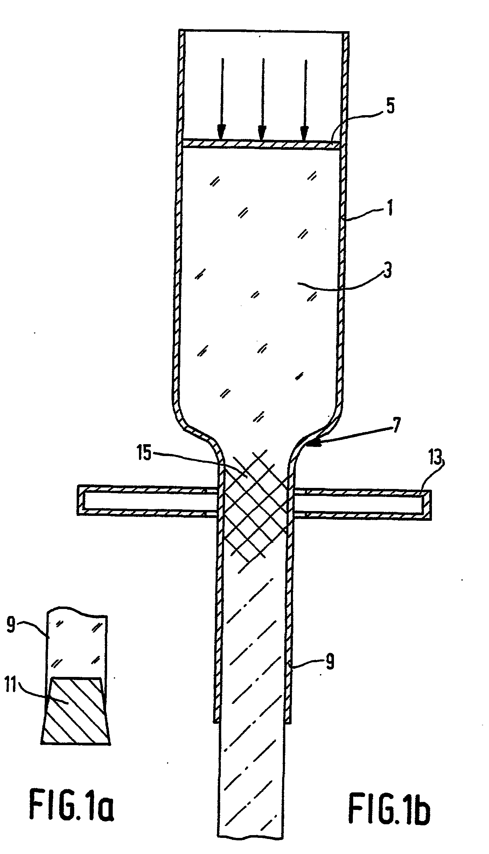

In einem Vorratsgefäß 1 befindet sich durch Schall- oder Ultraschall verflüssigtes Ausgangsmaterial für einen herzustellenden Glaskörper in Form einer dünnflüssigen Suspension 3 (vgl. Fig. 1b). Die Verflüssigung des Ausgangsmaterials wird außerhalb der dargestellten Vorrichtung über einen formschlüssig mit dem zu verflüssigenden Ausgangsmaterial in Kontakt gebrachten Schallschwinger bei einer Frequenz f=50 Hz oder über einen Ultraschallschwinger bei einer Frequenz f=35 kHz bewirkt. Über einen Stempel 5 wird die Suspension 3 durch das Mundstück der Strangpresse in Form einer Austrittsdüse 7 in ein an die Austrittsdüse 7 anschließendes Austrittsrohr 9 gepreßt, das aus einem verlustarmen, dielektrischen Material besteht. Als Materialien für das Austrittsrohr 9 kommen beispielsweise Glas oder Kunststoff, z.B. Polytetrafluoräthylen, in Betracht. Mit einem Mikrowellenresonator 13 wird Mikrowellenenergie in das Austrittsrohr eingekoppelt, so daß eine Erhitzungszone 15 entsteht, in der die Suspension 3 bis knapp unterhalb des Siedepunktes des Wassers erhitzt wird. Durch diese Erhitzung der Suspension tritt eine sehr stark forcierte Vernetzung der hochdispersen Primärteilchen über den gesamten Querschnitt des Austrittsrohres ein, die zu einem solchen Anstieg der Viskosität der Suspension 3 führt, daß sie strangverpreßt werden kann und dabei formstabile Preßkörper entstehen. Zu Beginn des Verfahrens wird das Austrittsrohr 9 mit einem Stopfen 11 verschlossen, bis die zunächst dünnflüssige Suspension 3 im Bereich der Erhitzungszone 15 soweit vernetzt und damit verfestigt ist, daß sie nicht mehr aus dem Austrittsrohr 9 auslaufen kann (vgl. Fig. 1a). Danach wird mit dem Stempel 5 in dem Maße Suspension 3 nachgedrückt, wie sie sich in der Erhitzungszone 15 verfestigen kann.

Aus dem Austrittsrohr 9 tritt dann ein formstabiler Strang aus, der auf bekannte Weise getrocknet werden kann. Eine unkontrollierte Trocknung des Grünkörpers durch die Erhitzung in der Erhitzungszone 15 tritt nicht ein, da die Erhitzungszone gegen die Außenwelt abgeschlossen ist.

Die Erfindung wurde mit folgendem Ausführungsbeispiel realisiert:

In einem Glasgefäß wird eine Suspension aus 200g hochdispersem $SiO_2$ einer Teilchengröße im Bereich von 10 bis 100 nm mit einem mittleren Teilchendurchmesser von 40 nm mit 30 ml einer 5%igen wässerigen $NH_4F$-Lösung und mit 190 ml destilliertem Wasser verrührt und über eine Dauer von 10 min unter weiterem Rühren in ein Ultraschallbad (f=35 kHz) gestellt. Auf diese Weise wird eine homogene, luftblasenfreie dünnflüssige Suspension erhalten, die in den Behälter 1, der sich entsprechend Figur 1b zu einem etwa 5 cm langen Austrittsrohr 9 eines Durchmessers von 16 mm verjüngt, eingefüllt wird. Auf dem Austrittsrohr ist ein Mikrowellenresonator 13 angebracht, der eine Leistung von etwa 150 W mit einer Frequenz f= 2,45 GHz in die Suspension 3 im Austrittsrohr 9 auf einer Länge von etwa 1 bis 2 cm einkoppelt. Die Suspension 3 erreicht dabei eine Temperatur von etwa 80°C. Nach Verfestigen der Suspension 3 in der Erhitzungszone 15 wird ein formstabiler Strang mit einer Geschwindigkeit von 10 cm/min mit einem Druck von 0,2 bar mittels des Preßstempels 5 aus der Strangpresse herausgedrückt, nachdem der Stopfen 11 am Ende des Auslaufrohres 9 entfernt wurde. Der Druck auf den Preßstempel 5 braucht nur so hoch zu sein, daß die Wandreibungsverluste im Austrittsrohr 9 überwunden werden. Der auf diese Weise erhaltene Grünkörper wurde langsam binnen 24 h an Luft getrocknet und danach in 100 min auf eine Temperatur von 800°C erhitzt und zur Entfernung von Verunreinigungen über eine Dauer von 1,5 h einem mit $SOCl_2$ gesättigten $O_2$-Gasstrom ausgesetzt. Die anschließende Sinterung erfolgte bei 1500°C in Heliumatmosphäre mit 2 Vol% Chlorgaszusatz, wobei der Grünkörper mit einer Absenkgeschwindigkeit von 3 mm/min durch den Ofen geführt wurde. Es wurde ein transparenter Glasstab eines Durchmessers von 14 mm erhalten, der Verunreinigungen, insbesondere Wasser und Übergangsmetalle, nur noch in einer Menge < 50 ppb enthielt. Der Glaskörper hatte eine Dichte von 2,20 g/cm³ und einen Brechungsindex $n_D$=1,4592 und war blasen- und schlierenfrei.

**Patentansprüche**

1. Verfahren zur Herstellung von Glaskörpern, bei dem aus dem Ausgangsmaterial für den Glaskörper ein poröser Grünkörper durch Strangpressen geformt und dieser anschließend getrocknet, gereinigt und gesintert wird, dadurch gekennzeichnet, daß das Ausgangsmaterial in Form einer thixotropen Suspension durch Einwirkung mechanischer Kräfte in einen Zustand mit Viskositätsminimum überführt und homogenisiert, in eine an ihrem Austrittsende zunächst verschlossene Strangpresse eingefüllt, in der Strangpresse im Bereich nach dem Mundstück und vor dem Austrittsende auf eine Temperatur unterhalb des Siedepunktes der Dispergierflüssigkeit erhitzt und anschließend nach Öffnen der Strangpresse als formstabil verformter Grünkörper ausgepreßt wird.

2. Verfahren nach Anspruch 1, dadurch gekennzeichnet, daß als Ausgangsmaterial für den Glaskörper eine Suspension eingesetzt wird, die $SiO_2$-Partikel eines Durchmessers im Bereich von 10 bis 500 nm, vorzugsweise 15 bis 100 nm, mit einem mittleren Teilchendurchmesser von 40 nm enthält.

3. Verfahren nach Anspruch 1 oder 2, dadurch gekennzeichnet, daß eine Suspension mit einem Feststoff:Dispergierflüssigkeit-Gewichtsverhältnis von 1:0,8 bis 1:2 eingesetzt wird.

4. Verfahren nach einem der Ansprüche 1 bis 3, dadurch gekennzeichnet, daß als Dispergierflüssigkeit Wasser eingesetzt wird.

5. Verfahren nach einem der Ansprüche 1 bis 4, dadurch gekennzeichnet, daß der Suspension ein ionogener Zusatzstoff zugefügt wird, der den pH-Wert der Suspension in Richtung auf den basischen Bereich verschiebt.

6. Verfahren nach Anspruch 5, dadurch gekennzeichnet, daß als ionogener Zusatzstoff eine Ammoniumverbindung eingesetzt wird.

7. Verfahren nach Anspruch 6, dadurch gekennzeichnet, daß als Zusatzstoff eine wässerige 5%ige NH₄F-Lösung eingesetzt wird.

8. Verfahren nach einem der Ansprüche 5 bis 7, dadurch gekennzeichnet, daß der ionogene Zusatzstoff in einer Menge von 0,1 bis 5,0 Gew.%, vorzugsweise 0,5 bis 1,0 Gew.%, bezogen auf den Feststoffanteil der Suspension, zugegeben wird.

9. Verfahren nach den Ansprüchen 7 und 8, dadurch gekennzeichnet, daß als Ausgangsmaterial eine wässerige Suspension eingesetzt wird, die SiO₂-Partikel eines mittleren Teilchendurchmessers von 40 nm bei einem Feststoff:Wasser-Gewichtsverhältnis von 1:1,1 enthält und der eine 5%ige wässerige NH₄F-Lösung in einer Menge von 0,75 Gew.%, bezogen auf den Feststoffanteil der Suspension, zugesetzt ist.

10. Verfahren nach einem der Ansprüche 1 bis 9, dadurch gekennzeichnet, daß das Ausgangsmaterial durch Einwirkung von Schall bei einer Frequenz f=20 bis 200 Hz oder Ultraschall bei einer Frequenz f=20 bis 50 kHz in einen Zustand mit Viskositätsminimum überführt wird.

11. Verfahren nach einem der Ansprüche 1 bis 10, dadurch gekennzeichnet, daß das Ausgangsmaterial in der Strangpresse durch Einkoppeln von Mikrowellenenergie einer Frequenz f≈ 2,5 GHz oder Hochfrequenzenergie einer Frequenz f≈ 27 MHz auf eine Temperatur unterhalb des Siedepunktes der Dispergierflüssigkeit erhitzt wird.

12. Vorrichtung zur Durchführung des Verfahrens nach den Ansprüchen 1 bis 11 mit einer Strangpresse mit einem Behälter zur Aufnahme von Ausgangsmaterial für den Glaskörper und mit einem Stempel, mit dem das Ausgangsmaterial in Richtung auf eine Austrittsdüse preßbar ist, gekennzeichnet durch ein an die Austrittsdüse (7) anschließendes Austrittsrohr (9), das an seinem, der Austrittsdüse gegenüberliegenden Ende mit einem Stopfen (11) verschließbar ist und eine Einrichtung (13), über welche in einer Erhitzungszone (15) Hochfrequenz- oder Mikrowellenenergie in das Austrittsrohr und die in ihm befindliche Ausgangsmasse in Form einer dünnflüssigen Suspension (3) einkoppelbar ist.

13. Vorrichtung nach Anspruch 12, dadurch gekennzeichnet, daß das Austrittsrohr (9) aus einem verlustarmen dielektrischen Material besteht.

14. Vorrichtung nach Anspruch 12 oder 13, dadurch gekennzeichnet, daß die Einrichtung (13) ein Mikrowellenresonator ist.

15. Vorrichtung nach Anspruch 12 oder 13, dadurch gekennzeichnet, daß die Einrichtung (13) eine Hochfrequenzspule ist.

16. Verfahren nach den Ansprüchen 1 bis 11, dadurch gekennzeichnet, daß der hergestellte Glaskörper als Vorform für optische Wellenleiter eingesetzt wird.

17. Verfahren nach den Ansprüchen 1 bis 11, dadurch gekennzeichnet, daß die hergestellten Glaskörper als Lampenkolben, insbesondere für Halogen- oder Gasentladungslampen, eingesetzt werden.

**Claims**

1. Method for the manufacture of glass bodies, in which a porous green body is formed by extrusion from the starting material for the glass body and this green body is subsequently dried, purified and sintered, characterized in that the starting material in the form of a thixotropic suspension is transferred to a state of minimum viscosity by the action of mechanical forces, and homogenized, after which it is introduced into a extruder which is initially closed at its outlet end, heated in the extruder in the area between the die and the outlet end to a temperature below the boiling point of the dispersing liquid and then, after the extruder is opened, pressed out as a dimensionally-stable deformed green body.

2. Method as claimed in Claim 1, characterized in that the starting material for the glass body is a suspension containing SiO₂ particles with a diameter in the range from 10 to 500 nm, preferably 15 to 100 nm, with an average particle diameter of 40 nm.

3. Method as claimed in Claim 1 or 2, characterized in that a suspension with a solids:dispersing liquid weight ratio of 1:0 to 1:2 is used.

4. Method as claimed in any one of the Claims 1 up to and including 3, characterized in that water is used as the dispersing liquid.

5. Method as claimed in any one of the Claims 1 up to and including 4, characterized in that an ionogenic substance which shifts the pH-value of the suspension towards alkalinity is added to the suspension.

6. Method as claimed in Claim 5, characterized in that an ammonium compound is used as the ionogenic additive.

7. Method as claimed in Claim 6, characterized in that an aqueous 5% NH₄F-solution is used as the additive.

8. Method as claimed in any one of the Claims 5 up to and including 7, characterized in that the ionogenic substance is added in a quantity of 1.0 to 5.0 wt.%, preferably 0.5 to 1.0 wt.%, of the solids content of the suspension.

9. Method as claimed in Claims 7 and 8, characterized in that the starting material is an aqueous suspension which contains SiO₂ particles with an average particle diameter of 40 nm and with a solids:water weight ratio of 1:1.1 and to which a 5% aqueous NH₄F-solution is added in a quantity of 0.75 wt.% of the solids content of the suspension.

10. Method as claimed in any one of the Claims 1 up to and including 9, characterized in that the starting material is transferred to a state of minimum viscosity by the action of sound at a frequency of f=20 to 200 Hz or ultrasound at a frequency of f=20 to 50 kHz.

11. Method as claimed in any one of the Claims 1 up to and including 10, characterized in that the starting material is heated in the extruder to a temperature below the boiling point of the dispersing liquid by the introduction of microwave energy of frequency f ≈ 2.5 GHz or high-frequency f ≈ 27 Mhz.

12. Device for carrying out the method as claimed in Claims 1 up to and including 11, comprising an extruder having a container for holding starting material for the glass body and a ram with which the starting material can be pressed towards an outlet nozzle, characterized by an outlet tube (9) which connects to the outlet nozzle (7), and which at the end opposite to the outlet nozzle can be closed with a plug (11), and an apparatus (13) by which high-frequency or microwave energy can be introduced into a heating zone (15) in the outlet tube and into the starting mass in the form of a low-viscosity suspension (3) contained therein.

13. Device as claimed in Claim 12, characterized in that the outlet tube (9) is made from a low-loss dielectric material.

14. Device as claimed in Claim 12 or 13, characterized in that the part (13) is a microwave resonator.

15. Device as claimed in Claim 12 or 13, characterized in that the part (13) is a high-frequency coil.

16. Method as claimed in Claims 1 up to and including 11, characterized in that the glass body manufactured is used as a preform for optical waveguides.

17. Method as claimed in Claims 1 up to and including 11, characterized in that the glass bodies manufactured are used as lamp envelopes especially for halogen or gas discharge lamps.

## Revendications

1. Procédé pour la fabrication de corps en verre, selon lequel un semi-produit poreux est formé à partir du matériau de départ pour le corps en verre par extrusion et ensuite séché, nettoyé et fritté, caractérisé en ce que le matériau de départ sous forme d'une suspension thixotrope est transformé par l'effet de forces mécaniques en un état de viscosité minimal et homogénéisé puis introduit dans une extrudeuse dont l'extrémité de sortie est d'abord fermée, ensuite chauffé dans l'extrudeuse dans la zone située après l'ajutage et avant l'extrémité de sortie à une température située au-dessous du point d'ébullition du liquide du dispersant et ensuite, après l'ouverture de l'extrudeuse, pressé en un semi-produit de forme stable façonnée.

2. Procédé selon la revendication 1, caractérisé en ce que comme matériau de départ pour le corps en verre est utilisée une suspension contenant des particules de SiO₂ d'un diamètre situé dans la gamme de 10 à 500 nm, de préférence 15 à 100 nm, le diamètre moyen des particules étant de 40 nm.

3. Procédé selon la revendication 1 ou 2, caractérisé en ce qu'on utilise une suspension dans un rapport en poids substance solide: dispersant de 1:0,8 à 1:2.

4. Procédé selon l'une des revendications 1 à 3, caractérisé en ce que de l'eau est utilisée comme dispersant.

5. Procédé selon l'une des revendications 1 à 4, caractérisé en ce que la suspension est additionnée d'une substance d'addition ionogène pouvant décaler la valeur pH de la suspension dans la direction de la gamme basique.

6. Procédé selon la revendication 5, caractérisé en ce qu'un composé d'ammonium est utilisé comme substance d'addition ionogène.

7. Procédé selon la revendication 6, caractérisé en ce qu'une solution aqueuse à 5% de NH₄F est utilisée comme substance d'addition.

8. Procédé selon l'une des revendications 5 à 7, caractérisé en ce que la substance d'addition ionogène est ajoutée dans une quantité de 0,1 à 5,0% en poids, de préférence 0,5 à 1,0% en poids, rapportée à la part de substance solide de la suspension solide de la suspension.

9. Procédé selon la revendication 7 et 8, caractérisé en ce que comme matériau de départ est utilisée une suspension aqueuse contenant des particules de SiO₂ d'un diamètre moyen des particules de 40 nm dans un rapport en poids substance solide:eau de 1:1,1 et que la solution aqueuse à 5% de NH₄F est ajoutée dans une quantité de 0,75% en poids rapportée à la part de substance solide de la suspension.

10. Procédé selon l'une des revendications 1 à 9, caractérisé en ce que le matériau de départ est transformé par l'effet de sons à une fréquence f dans la gamme de 20 à 200 Hz ou par ultrasons à une fréquence de f dans la gamme de 20 à 50 kHz dans un état de viscosité minimale.

11. Procédé selon l'une des revendications 1 à 10, caractérisé en ce que le matériau de départ dans l'extrudeuse est chauffé par couplage d'énergie à micro-ondes d'une fréquence f ≈ 2,5 GHz ou d'énergie à haute fréquence d'une fréquence f ≈ 27 MHz à une température située au-dessous du point d'ébullition du dispersant.

12. Dispositif pour la mise en œuvre du procédé selon les revendications 1 à 11 avec une extrudeuse comportant un récipient pour la réception du matériau de départ pour le corps en verre et un poinçon permettant de presser le matériau de départ dans la direction d'une buse de sortie, caractérisé par un tube de sortie (9) qui se raccorde à la buse de sortie (7) et dont l'extrémité opposée à la buse de sortie peut être fermée avec un bouchon (11) et par un dispositif (13) permettant de coupler de l'énergie à haute fréquence ou à micro-ondes dans une zone de chauffage (15) dans le tube de sortie et dans la masse de départ contenue dans ce dernier et formée par une suspension fluide (3).

13. Dispositif selon la revendication 12, caractérisé en ce que le tube de sortie (9) est constitué par un matériau diélectrique à pertes faibles.

14. Dispositif selon la revendication 12 ou 13, caractérisé en ce que le dispositif (13) est un résonateur à micro-ondes.

15. Dispositif selon la revendication 12 ou 13, caractérisé en ce que le dispositif (13) est une bobine à haute fréquence.

16. Procédé selon les revendications 1 à 11, caractérisé en ce que le corps en verre fabriqué peut être utilisé comme préforme pour des guides d'onde optiques.

17. Procédé selon les revendications 1 à 11, caractérisé en ce que le corps en verre fabriqué peut être utilisé comme ampoule pour lampes notamment des lampes à décharge dans le gaz ou à l'halogène.

FIG.1a

FIG.1b